# EUROPEAN PATENT APPLICATION

(11) **EP 2 672 241 A2**
(43) Date of publication of application: **11.12.2013**
(21) Application number: 13170505.5
(22) Date of filing: 04.06.2013
(51) Int. Cl.: G01H 3/00

(54) **Sensor System and Antenna for use in a Sensor System**

(30) Priority: 05.06.2012 US 201213488846
(71) Applicant: General Electric Company, Schenectady, New York 12345 (US)
(72) Inventor: Whiteley, Joseph Lee, Minden, NV 80423 (US); Sheikman, Boris Leonid, Minden, NV 89423 (US); Go, Stephen Yuehin, Niskayuna, NY 12309 (US); Hayashia, Robert, Niskayuna, NY 12309 (US); Lee, Yongjae, Niskayuna, NY 12309 (US)
(74) Representative: Picker, Madeline Margaret

(57) **Abstract**

A sensor head 102 configured for use in a radio frequency operated sensing device, the sensor head comprising a non-planar antenna 404. The sensor head may further include means for connecting the sensor head to a data conduit 204. The non-planar antenna may be configured to have a predetermined resonance frequency within the radio frequency spectrum.

## Description

The present application relates generally to power systems and, more particularly, to a radio frequency operated sensor devices and antennas for use therein.

Known machines may exhibit vibrations and/or other abnormal behavior during operation. One or more sensors may be used to measure and/or monitor such behavior and to determine, for example, an amount of vibration exhibited in a machine drive shaft, a rotational speed of the machine drive shaft, and/or any other operational characteristic of an operating machine or motor. Often, such sensors are coupled to a machine monitoring system that includes a plurality of monitors. The monitoring system receives signals from one or more sensors, performs at least one processing step on the signals, and transmits the modified signals to a diagnostic platform that displays the measurements to a user.

At least some known machines use eddy current sensors to measure the vibrations in and/or a position of a machine component. However, the use of known eddy current sensors may be limited because a detection range of such sensors is only about half of a width of the eddy current sensing element. Other known machines use optical sensors to measure a vibration and/or a position of a machine component. However, known optical sensors may become fouled by contaminants and provide inaccurate measurements, and as such, may be unsuitable for industrial environments. Moreover, known optical sensors may not be suitable for detecting a vibration and/or a position of a machine component through a liquid medium and/or a medium that includes particulates. As such, there is a need for sensors of this type that offer improved performance characteristics.

In one aspect, the present patent application describes a sensor head configured for use in a radio frequency operated sensing device, the sensor head comprising a non-planar antenna. The sensor head may further include means for connecting the sensor head to a data conduit. The non-planar antenna may be configured to have a predetermined resonance frequency within the radio frequency spectrum.

In another aspect, the present patent application describes a radio frequency operated sensing device for sensing a component. The sensing device may include: a sensor head comprising a non-planar antenna that generates an electromagnetic field from a radio signal, wherein a loading is induced to said non-planar antenna when the component interacts with the electromagnetic field; a data conduit coupled to the sensor head, wherein at least one loading signal representative of the loading is reflected within said data conduit from said non-planar antenna; and a signal processing device configured to receive the at least one loading signal and to generate an electrical output for use in monitoring the component.

These and other features of the present application will become apparent upon review of the following detailed description of the preferred embodiments when taken in conjunction with the drawings and the appended claims.
Figure 1 is a block diagram of an exemplary power system having a sensor system according to aspects of the present application.
Figure 2 is a more detailed representation of the sensor system shown in Figure 1.
Figure 3 is a front view of a planar antenna that may be used with the sensor system shown in Figure 2.
Figure 4 is a perspective view of the planar antenna of Figure 3.
Figure 5 is perspective view of an exemplary non-planar antenna that may be used with the sensor system shown in Figure 2.
Figure 6 is a side view of the non-planar antenna shown in Figure 5.
Figure 7 is perspective view of another exemplary non-planar antenna that may be used with the sensor system shown in Figure 2.
Figure 8 is a side view of the non-planar antenna shown in Figure 7.
Figure 9 is a side view of another exemplary non-planar antenna that may be used with the sensor system shown in Figure 2.
Figure 10 is perspective view of another exemplary non-planar antenna that may be used with the sensor system shown in Figure 2.

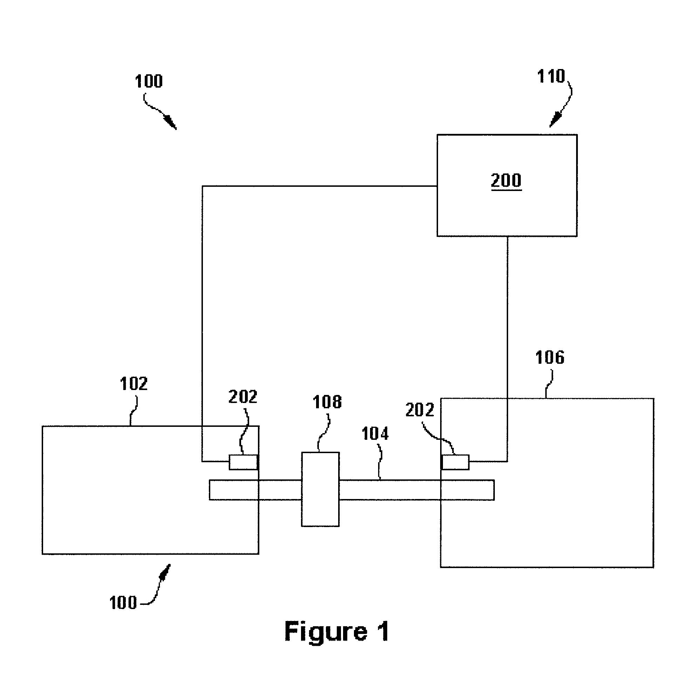

Figure 1 shows an exemplary power system 100 that includes a machine 102. The machine 102 may be, but is not limited to only being, a wind turbine, a hydroelectric turbine, a gas turbine, or a compressor. Alternatively, the machine 102 may be any other machine used in a power system. In the exemplary case, the machine 102 rotates a drive shaft 104 coupled to a load 106, such as a generator. The drive shaft 104 may be supported by one or more bearings (not shown) housed within machine 102 and/or within load 106. Alternatively or additionally, the bearings may be housed within a separate support structure 108, such as a gearbox, or within any other structure or component that enables power system 100 to function as described herein.

The power system 100 further includes at least one sensor system 110 that measures and/or monitors at least one operating condition of the machine 102, the drive shaft 104, the load 106, and/or any other suitable component of the power system 100. As illustrated, the sensor system 110 may include a signal processing device 200 and, remote from that, a sensor head 202, which, for example, may be connected to the signal processing device 200 via a data conduit 204. The sensor system 110 is a proximity sensor that has a sensor head 202 positioned near the drive shaft 104, which is configured to measure and/or monitor a distance defined between the drive shaft 104 and the sensor head 202. According to one aspect of the present invention, the sensor system 110 is a radio frequency operated sensing device. As used herein, the term "radio frequency operated sensing device" is defined as those proximity sensing devices described herein and in commonly-assigned US Patent Application Serial No. 12/252435 (General Electric Docket No. 229509), US Patent Application Serial No. 12/388088 (General Electric Docket No. 229666), and US Patent Application Serial No. 12/951432 (General Electric Docket No. 246112), all of which are hereby expressly incorporated, in their entirety, into the present application. In general, a radio frequency operated sensing device uses radio frequency signals or radio signals, which may include microwaves, to measure a proximity, such as a static and/or vibration proximity, of a component of power system 100 with respect to the sensing device or a sensor head of the sensing device. As used herein, the terms "radio frequency" refers to a radio or electrical signal or component that receives and/or transmits signals having one or more frequencies between about 300 Megahertz (MHz) and about 300 Gigahertz (GHz), and "microwaves" refers to waves within the radio frequency that have a wave length ranging from 0.001 to 1 meters.

It will be appreciated that the sensor system 110 may measure and/or monitor the position of any other component of power system 100, as might be required. In the exemplary case of Figure 1, the sensor head 202 is positioned in a desired position within the power system 100, which is in proximity to the drive shaft 104. During operation, the machine 102 may cause one or more components of power system 100, such as drive shaft 104, to change position with respect to at least one sensor system 110. For example, vibrations may be induced to the components and/or the components may expand or contract as the operating temperature within power system 100 changes. In the exemplary case of Figure 1, sensor system 110 measures and/or monitors the proximity and/or the position of the components relative to each sensor head 202.

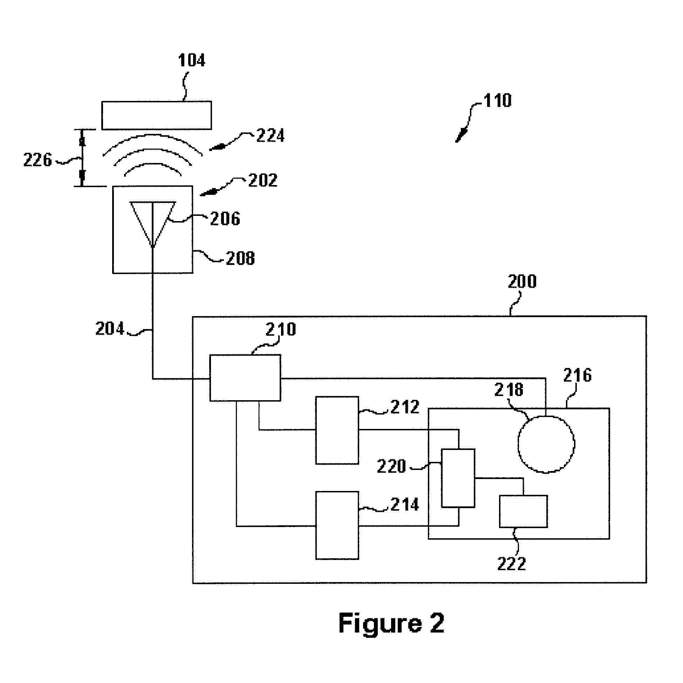

Figure 2 provides a more detailed representation of the sensor system 110 schematically represented in Figure 1. As illustrated, the sensor system 110 includes the signal processing device 200 and, removed from that, the sensor head 202. The sensor head 202 may be connected to the signal processing device 200 via a data conduit 204. As discussed in more detail below, the sensor head 202 includes structure for emitting radio frequency signals, which will be referred to herein as an "antenna" or "antenna 206". The antenna 206 may be coupled to and/or positioned within a sensor head housing 208. It will be appreciated that the antenna 206 is configured to have at least one resonant frequency within the radio frequency range.

In an exemplary case, as discussed in more detail in the above-incorporated applications, the signal processing device 200 includes a directional coupling device 210 coupled to a transmission power detector 212, to a reception power detector 214, and to a signal conditioning device 216. The signal conditioning device 216 includes a signal generator 218, a subtractor 220, and a linearizer 222. It will be appreciated that the antenna 206 emits an electromagnetic field 224 when a radio frequency signal is transmitted through antenna 206.

During operation, the signal generator 218 may generate at least one electrical signal having a radio frequency (hereinafter referred to as a "radio signal") that is equal or approximately equal to the resonant frequency of the antenna 206. The signal generator 218 transmits the radio signal to the directional coupling device 210. The directional coupling device 210 then transmits the radio signal to the transmission power detector 212 and to the antenna 206. It will be appreciated that as the radio signal is transmitted through antenna 206, an electromagnetic field 224 is emitted from the antenna 206. If an object, such as a drive shaft 104 or another component of the machine 102 or of power system 100 enters and/or changes a relative position within electromagnetic field 224, an electromagnetic coupling may occur between the object and field 224. More specifically, because of the presence of the object within electromagnetic field 224 and/or because of such object movement, electromagnetic field 224 may be disrupted, for example, because of an induction and/or capacitive effect induced within the object that may cause at least a portion of electromagnetic field 224 to be inductively and/or capacitively coupled to the object as an electrical current and/or charge. In such an instance, the antenna 206 is detuned (i.e., a resonant frequency of antenna 206 is reduced and/or changed) and a loading is induced to antenna 206. The loading induced to the antenna 206 causes a reflection of the radio signal (hereinafter referred to as a "detuned loading signal") to be transmitted through the data conduit 204 to the directional coupling device 210. In the exemplary embodiment, the detuned loading signal has a lower power amplitude and/or a different phase than the power amplitude and/or the phase of the radio signal. Moreover, in the exemplary embodiment, the power amplitude of the detuned loading signal is dependent upon the proximity of the object to the antenna 206. The directional coupling device 210 transmits the detuned loading signal to the reception power detector 214.

In the exemplary embodiment, the reception power detector 214 determines an amount of power based on and/or contained within the detuned loading signal and transmits a signal representative of the detuned loading signal power to the signal conditioning device 216. Moreover, the transmission power detector 212 determines an amount of power based on and/or contained within the radio signal and transmits a signal representative of the radio signal power to the signal conditioning device 216. In the exemplary embodiment, the subtractor 220 receives the radio signal power and the detuned loading signal power, and calculates a difference between the radio signal power and the detuned loading signal power. The subtractor 220 transmits a signal representative of the calculated difference (hereinafter referred to as a "power difference signal") to the linearizer 222. In the exemplary embodiment, an amplitude of the power difference signal is proportional, such as inversely or exponentially proportional, to a distance 226 defined between the object, such as the drive shaft 104, within the electromagnetic field 224 and the sensor head 202 and/or the antenna 206 (i.e., the distance 226 is known as the object proximity). Depending on the characteristics of the antenna 206, such as, for example, the geometry of the antenna 206, the amplitude of the power difference signal may at least partially exhibit a nonlinear relationship with respect to the object proximity.

In the exemplary embodiment, the linearizer 222 transforms the power difference signal into a voltage output signal (i.e., the "proximity measurement signal") that exhibits a substantially linear relationship between the object proximity and the amplitude of the proximity measurement signal. Moreover, in the exemplary embodiment, the linearizer 222 transmits the proximity measurement signal to a diagnostic system (not shown) with a scale factor suitable for processing and/or analysis within the diagnostic system. In the exemplary embodiment, the proximity measurement signal has a scale factor of volts per millimeter. Alternatively, the proximity measurement signal may have any other scale factor that enables a diagnostic system and/or power system 100 to function as described herein.

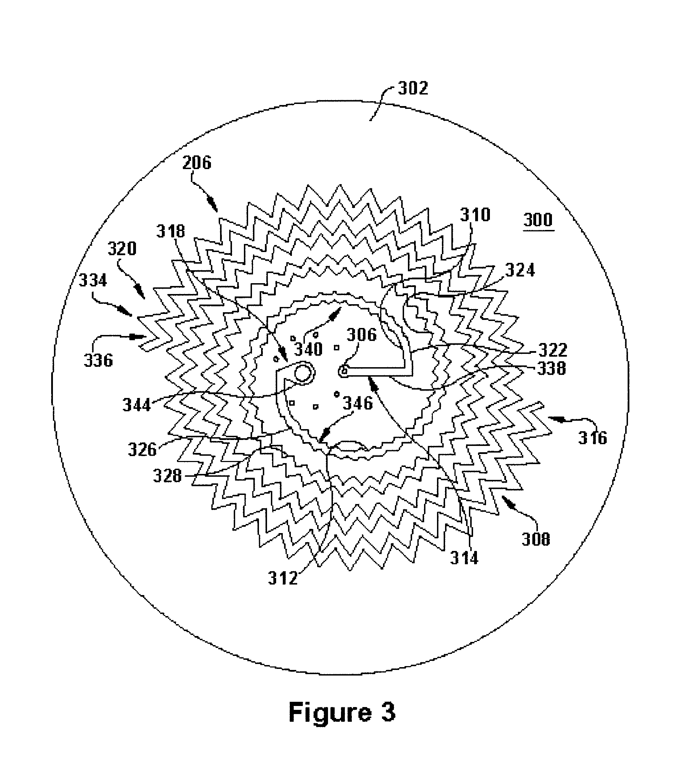

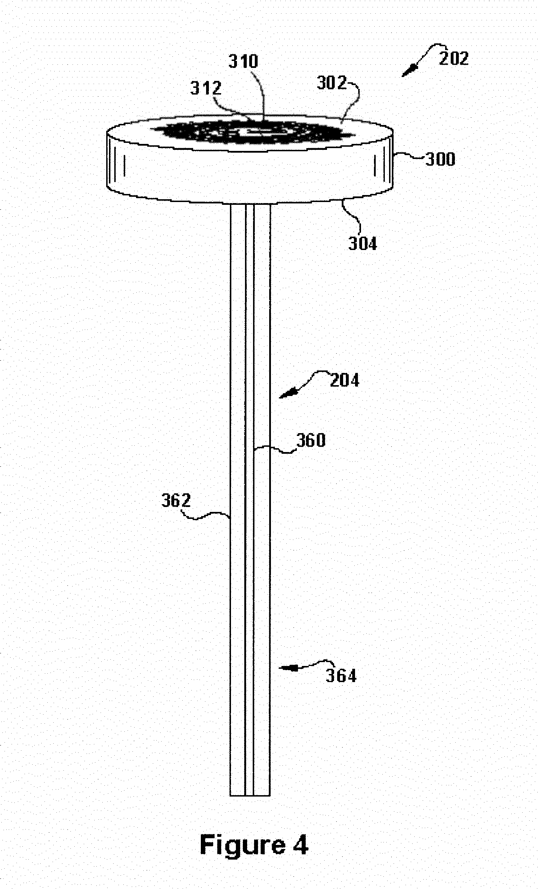

Figure 3 is a front view of an exemplary planar antenna 206 and a body 300 that may be used within the sensor head 202. Figure 4 is a perspective view of an exemplary body 300 and the data conduit 204 that may be used with the sensor head 202. In the exemplary embodiment, the body 300 is positioned within, and/or is coupled to, a sensor head housing 208 (shown in Figure 2). The planar antenna 206 may be coupled to the body 300.

As shown in Figure 3 and 4, in the exemplary embodiment, the body 300 includes a front surface 302 and an opposing rear surface 304. The antenna 206, in the exemplary embodiment of Figures 3 and 4, is coupled to front surface 302 and extends radially outward from a center 306 of the front surface 302. More specifically, in the exemplary embodiment, the body 300 is a substantially planar printed circuit board, and antenna 206 includes one or more traces or conductors 308 that are formed integrally with, and/or coupled to, the front surface 302 of the body 300. Alternatively, the antenna 206 and/or the body 300 may be configured and/or constructed in any other arrangement that enables sensor system 110 to function as described herein. In the exemplary embodiment, as illustrated, the conductors 308 of the antenna 206 form a first arm 310 and a second arm 312 that each extend radially outward from the center 306. The first arm 310 includes a first end 314 positioned proximate to the center 306, and a second end 316 positioned radially outward from the center 306. The second arm 312 includes a first end 318 positioned proximate to the center 306, and a second end 320 positioned radially outward from the center 306. In the exemplary embodiment of Figure 3, the first arm 310 and the second arm 312 are substantially coplanar with the front surface 302 such that the antenna 206 does not extend any distance axially outward from the front surface 302. Alternatively, the antenna 206 and/or the body 300 may include any number of arms and/or may be any shape that enables the sensor system 110 to function as described herein. The first arm 310 and the second arm 312, in the exemplary embodiment, are radially interleaved with each other. More specifically, the first arm 310 and the second arm 312 are interleaved with each other about the center 306. As such, a radially outer edge 322 of the first arm 310 is substantially bounded by a radially inner edge 324 of the second arm 312, and a radially outer edge 326 of the second arm 312 is substantially bounded by a radially inner edge 328 of the first arm 310.

As illustrated, the arms 310 and 312 have a substantially spiral shape about the center 306 as the arms 310 and 312 extend radially outward from the center 306 in a counterclockwise direction. Alternatively, the first arm 310 and/or second arm 312 may have any shape and/or configuration that enables the antenna 206 to function as described herein. In the exemplary embodiment, a width of first arm 310 and a width of second arm 312 are substantially equal to each other, and are substantially constant as the arms 310 and 312 extend outward from the center 306. Alternatively, widths and are different from each other, and/or width and/or width changes as the arms 310 and 312 extend outward from the center 306. In one embodiment, the width increase as the arms 310 and 312 extend outward from the center 306. The first arm 310 and second arm 312 each may include at least one peak 334 and at least one trough 336. More specifically, in the exemplary embodiment, the first arm 310 includes a coupling portion 338 and a spiral portion 340 that spirals radially outward about the center 306 with alternating peaks 334 and troughs 336 that progressively increase in amplitude as a radius from the center 306 to the inner edge 328 increases. The second arm 312 includes a coupling portion 344 and a spiral portion 346 that spirals radially outward about the center 306 with alternating peaks 334 and troughs 336 that progressively increase in amplitude as a radius from the center 306 to the inner edge 324 increases. As such, the first arm 310 and second arm 312 are each formed with a spiral "zigzag" pattern, or a substantially spiral shape with a "zigzag" pattern superimposed thereon, that provides an increased electrical length within a compact the body 300 as compared to antennas that do not have a spiral zigzag pattern. In the exemplary embodiment, the peaks 334 and troughs 336 of the first arm 310 are not aligned with the peaks 334 and troughs 336 of the second arm 312. More specifically, a radius extending from the center 306 and bisecting a radially outer peak of the second arm 312 is offset an angular distance from a radius extending from the center 306 and bisecting a radially inner peak of the first arm 310. As such, a reduced amount of capacitive coupling is present between the first arm 310 and second arm 312 and a reduced amount of energy is confined within the body 300 and/or within the first arm 310 and second arm 312 as compared to an antenna that may include the peaks 334 and/or troughs 336 that are aligned with each other. Accordingly, an increased amount of the energy from the radio signal may be transmitted to electromagnetic field 224 as compared to prior art antennas.

As shown in Figure 4, in the exemplary embodiment, the data conduit 204 includes an inner conductor 360, and an outer conductor 362 that substantially encloses inner conductor 360 such that conductors 360 and 362 are coaxial. Moreover, in the exemplary embodiment, the data conduit 204 is a semi-rigid cable 364 that couples antenna 206 to signal processing device 200 (shown in Figure 2). Alternatively, the data conduit 204 is any other cable or conduit or connecting means that enables sensor system 110 to function as described herein. In the exemplary embodiment of Figure 3, for example, the first arm 310 is coupled to the inner conductor 360 via the coupling portion 338, and second arm 312 is coupled to outer conductor 362 via coupling portion 344.

During operation, at least one radio signal is transmitted to the antenna 206 via the data conduit 204. The radio signal is transmitted to the first arm 310 and second arm 312 via the inner conductor 360 and outer conductor 362, respectively. As the radio signal is transmitted through the first arm 310 and second arm 312, an electromagnetic field 224 (shown in Figure 2) is emitted. A proximity measurement is determined based on a loading induced to the antenna 206, as described more fully above. The substantially spiral zigzag pattern of the antenna 206 provides an increased electrical length within a compact body 300 as compared to prior art antennas. Moreover, the spiral zigzag pattern of the antenna 206 and the non-aligned peaks 334 and troughs 336 of the first arm 310 and second arm 312 facilitate emitting an increased amount of electromagnetic energy to electromagnetic field 224 as compared to prior art antennas.

As one of ordinary skill in the art will appreciate, sensor heads 202 having antenna that are substantially planar in configuration, such as the exemplary planar antenna 206 of Figures 3 and 4, have certain performance characteristics that make them well-suited for certain applications, but not ideal in others. It has been discovered that certain 3-demensional or non-planar antenna offer performance characteristics that prove advantages in certain types of applications. As discussed in more detail below, these beneficial performance characteristics of non-planar antenna include: 1) the usage of lower resonance frequencies, which enables the usage of lower cost system components; 2) thinner profiles, allowing for smaller probe bodies; 3) lower cost manufacturing; and 4) due to lower resonance frequencies, extended measuring ranges compared to planar antenna structures.

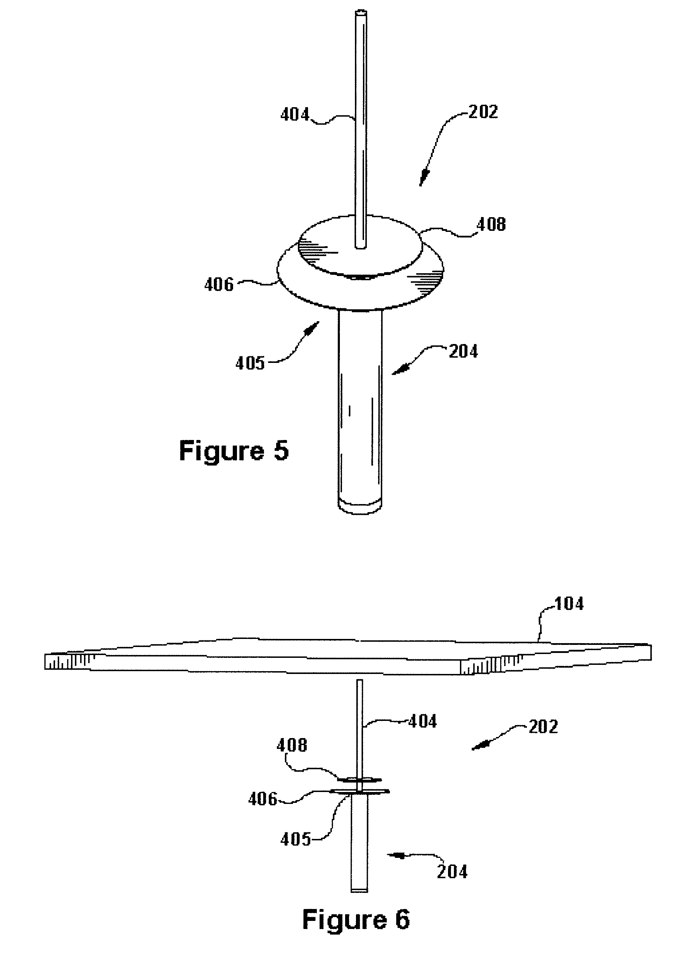

As used herein, the term "planar antenna" is used to describe antenna structure, such as the one illustrated in Figures 3 and 4, that do not extend axially from the body 300 (or, more specifically, the location at which the antenna connects to the data conduit). For example, the antenna embodiment of Figures 3 and 4 is classified as having a planar configuration because the emitter or antenna structure is confined to the planar front surface 302 of the body 300 and the conductor of the conduit 204 extends through the body 300 to the axial location of the plane in which the antenna 206 is confined. Discussed below, in relation to Figures 5 through 10, are several types of non-planar antennas which may be used in the proximity sensor systems 110 and, specifically, the sensor heads 202, that are described above so that certain performance and manufacturing benefits may be achieved. It will be appreciated that the term "non-planar" is used to describe such antennas because each has a non-planar antenna structure that extends axially from the body 300 or, if the body 300 is not present, the location at which the antenna connects to the conduit 204. Specifically, because the non-planar antenna extends outward and away from the body portion of the sensor head 202, it could not be described as being contained in a plane, such as, for example, the planar front surface 302 of the body 300 in Figure 4. Accordingly, provided below in Figures 5 through 10 are several exemplary embodiments of non-planar antenna that may be used with particular effectiveness in the sensor head 202 and, generally, the sensor systems 110 that are described above. In describing these antenna, note that the "body" mentioned above may simply be the connection or connector that connects the non-planar antenna structure to the signal carrying conduit, and that the terms "axial", "radial" and "circumferential" are defined by cylindrical shaped data conduit 204 shown in the figures. In addition, given the non-planar characteristics of the exemplary antenna discussed below, it is helpful to define relative axial positions in relation to their distance from the end point of the conduit 204. Accordingly, as used herein, the "near end" or "near side" of a component is the end or side that resides closer or faces toward the termination point of the data conduit 204, and the "far end" or "far side" of a component is the end or side that resides farther away from or faces away from the termination point of the conduit 204. Consistent with this, movement "axially outward" is movement away from the termination point of the conduit 204 and "axially inward" is movement toward the termination point of the conduit 204.

Figures 5 and 6 illustrate a sensor head 202 having a non-planar antenna 404, according to one aspect of the present invention. It will be appreciated that this type of sensor head 202 may be used in the sensor systems 110 described above (i.e., a radio frequency operated sensing device). The sensor head 202 includes a connector 405 (which, in this instance, is simply represented by the nexus between the sensor head 202 and the conduit 204). The non-planar antenna 404, in this instance, is an axially-extending non-planar monopole antenna (hereinafter "non-planar monopole antenna 404"). As shown, the non-planar monopole antenna 404 extends axially from the connector. In shape and configuration, the non-planar monopole antenna 404 may be described as narrow, linear antenna, similar to those commonly used as radio antennas on automobiles. The non-planar monopole antenna 404 has two ends, which may be referred to as a near end, which resides adjacent to the connector 405, and a far end, which is axially removed a distance corresponding to the length of the non-planar monopole antenna 404 from the termination point of the conduit 204.

In preferred embodiments, certain other features also are included in the sensor head 202 of Figures 5 and 6. For example, the sensor head 202 includes a ground plane 406 located at or in proximity to the near end of the non-planar monopole antenna 404. In certain embodiments, the ground plane 406 is formed at the connection between the non-planar monopole antenna 404 and the conduit 204, and, thus, may be integrated into the connector 405 of the sensor head 202. As illustrated, the ground plane 406 may be configured as a disc that is circular in shape, though other variations are also possible. The ground plane 406 may be made of a metallic material. In certain embodiments, a parasitic element 408 is also included. The parasitic element 408 may be configured as a disc that is circular in shape and similar, though smaller, than the disc that forms the ground plane 406. As shown, the parasitic element 408 may reside on the non-planar monopole antenna 404 and be positioned toward the near end of the non-planar monopole antenna 404. In preferred embodiments, the parasitic element 408 is positioned such that a narrow axial offset is maintained between it and the ground plane 406, as illustrated, with the parasitic element 408 being positioned nearer the far end of the non-planar monopole antenna 404 than the ground plane 406. The discs of the ground plane 406 and the parasitic element 408 may be aligned so that they are substantially parallel.

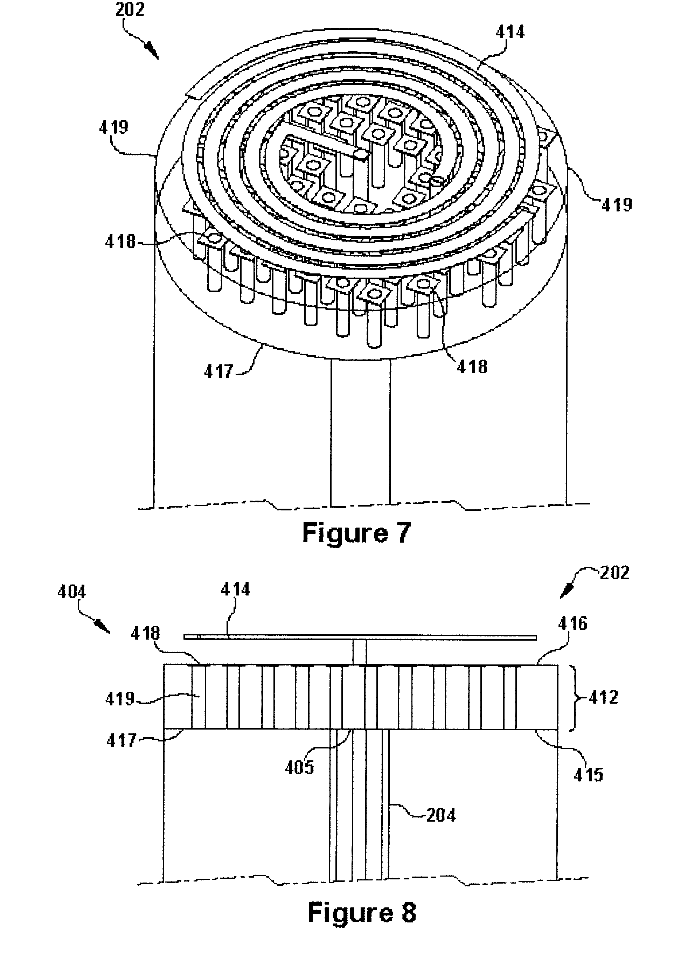

Figures 7 and 8 illustrate a sensor head 202 having an alternative non-planar antenna 404 according to another aspect of the present invention. In this case, the sensor head 202 includes a connector 405, which connects sensor head 202 to the conduit 204. The non-planar antenna 404 includes an axially-extended ground plane 412, and, axially removed from the ground plane 412, a spiral-planar antenna structure 414. In a preferred embodiment, the axially-extended ground plane 412 has a cylindrical shape that aligns radially with the conduit 204. The axially-extended ground plane 412 may be described as having a near side 415, which is a planar surface positioned at or near the connector 405 or the termination point of the conduit 204, and a far side 416, which is the planar surface that opposes the near side 415. From the near side 415, the axially-extended ground plane 412 extends axially outward to where it terminates at the far side 416. Positioned across an axial offset or gap from the planar far side 416 of the axially extended ground plane 412, the spiral-planar antenna 414 may be configured such that its planar disc-shape is approximately parallel to the far side 416 of the axially-extended ground plane 412.

As illustrated, the axially-extended ground plane 412 may have a general disc-like cylindrical shape, similar to the ground plane 406 discussed in relation to Figures 5 and 6, but appreciably thicker in the axial dimension. It will be appreciated that the axially-extended ground plane 412 functions as an energy bandgap structure or frequency selective surface that results in a ground plane of two levels. Specifically, the near side 415 of the axially-extended ground plane 412 may include a solid metal ground plane, which is referred to herein as full ground 417. Instead of a full ground plane, the far surface 416 includes a plurality of discrete patches 418 having gaps formed between them that together form a discontinuous ground surface, which is referred to herein as "patch ground 419". As illustrated, each of the patches 418 are connected to the full ground 417 by a vias 420, which may be described as pedestal-like structure formed between the patches 418 at the far side 416 and the full ground 417 at the near side 415 of the axially-extended ground plane 412. The patches 418 may be rectangular in shape, though it will be appreciated that their shape and size may be altered to conform to a desired operating frequency.

The spiral planar antenna 414 is supported by structure such that it maintains a position that is axially offset from the far surface 416 of the axially-extended ground plane 412. It will be appreciated that the distance between patches 418, the planar-spiral antenna 414, as well as dielectric properties, axail offset distance, lower level substrate, and other characteristics may be appropriately tuned or optimized to achieve a desired RF response. However, as will also be appreciated, the formation of the patch ground 419 (via the plurality of patch 418/vias 420 pairings) between the full ground 417 and the planar-spiral antenna 414 offers certain antenna performance benefits to the sensor system 110, including, but not limited to, increased measuring sensitivity.

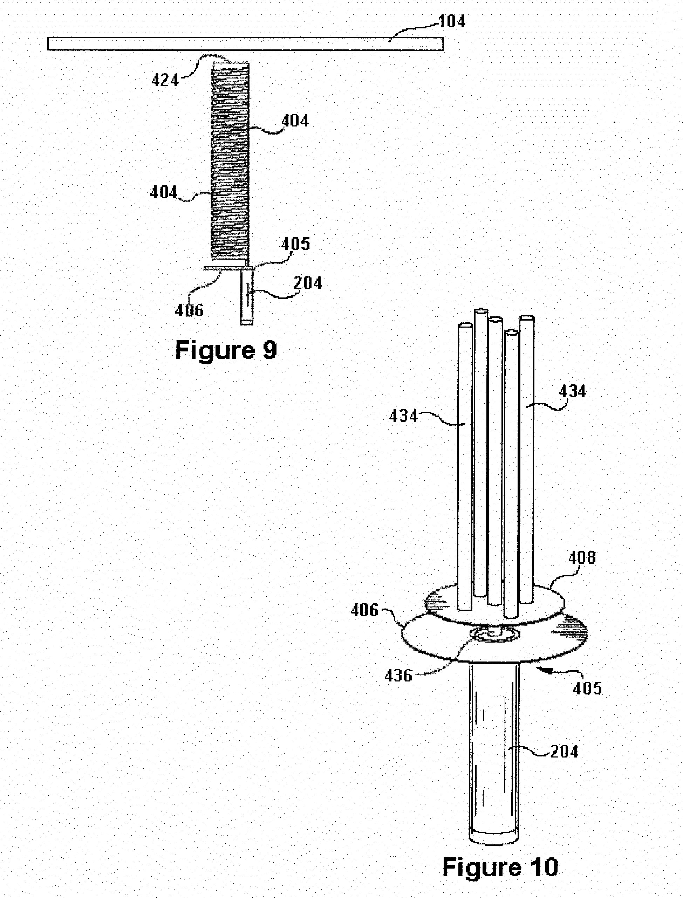

Figure 9 provides a perspective view of a sensor head 202 having an alternative non-planar antenna 424 that may be used in the sensor systems 110 described above to achieve certain enhanced performance capabilities. In this case, the sensor head 202 includes a connector 405, which connects sensor head 202 to the conduit 204, a ground plane 406 similar to the one described above in relation to Figures 5 and 6, and a non-planar antenna 404 having a helical structure (hereinafter "non-planar helical antenna 404"). In a preferred embodiment, the non-planar helical antenna 404, as illustrated, comprises a helicoidal shape that extends axially away from the connector 405, which in this case is again the nexus or connecting point between the sensor head 202 and the conduit 204. In profile the non-planar helical antenna 404 may have a circular cross-sectional shape, within which a substrate 424 having a cylindrical shape may be used to support the structure of the non-planar helical antenna 404. As illustrated, the non-planar helical antenna 404 may include a number of spaced turns, which, taken together, may be described as "spring-like" in appearance. It will be appreciated that the number of turns, pitch, metal width, and the like are parameters that may be optimized to satisfy specific applications.

In addition, in a preferred embodiment, the non-planar helical antenna 404 may be radially offset from the conduit 204, which is the configuration shown in Figure 9. As stated, a ground plane 406 may be included. The size of ground plane 406 is also another parameter that may be optimized to obtain a reasonable linear performance. In the case where the non-planar helical antenna 404 is radially offset from the conduit 204, it will be appreciate that the ground plane 406 also may be radially offset so that it radially aligns with the non-planar helical antenna 404. As illustrated, the ground plane 406 may include a thin, dislike structure that has a radial profile similar in diameter to that of the non-planar helical antenna 404.

Figure 10 provides a perspective view of another exemplary sensor head 202 having an alternative non-planar antenna 404, which also may be used with effectiveness in the sensor systems 110 described above. In this case, the sensor head 202 may be similarly configured as the embodiments of Figures 5 and 6, but instead of including a non-planar monopole antenna, a plurality of monopole antennas are grouped together, which is a configuration that will be referred to herein as a "non-planar multiple pole antenna 404". Specifically, the embodiment of Figure 10 includes a connector 405, which, again, provides means by which the sensor head 202 connects to the conduit 204, a ground plane 406, which may be similar to the one described above in relation to Figures 5 and 6, a monopole structure or bridge 436, which connects the ground plane 406 to a parasitic element 408. The parasitic element 408 may have a disc configuration and be arranged parallel to and axially offset from the ground plane 406, as illustrated. At this point the exemplary embodiment of Figure 10 deviates from the monopole embodiment described in relation to Figures 5 and 6. That is, instead of just one pole antenna, the embodiment of Figure 10 has multiple pole antennas extending from the far side of the parasitic element 408. Specifically, the non-planar multiple pole antenna 404 includes a plurality of straight, cylindrical poles that each extend axially from the far side of the parasitic element 408, each of which is similar to the monopole antenna described earlier. In the preferred embodiment shown, the non-planar multiple pole antenna 404 includes five pole antennas that are arranged with a central pole and four surrounding poles, which are spaced about the central pole. As illustrated, the poles may be similar in length and substantially parallel to each other. It will be appreciated that these characteristics may be modified to suit a particular application. It has been discovered that the grouping of several monopoles together to create the multiple pole antenna 404 enables a wider range of linear and dynamic response in return loss change. And, although the design shows the strong coupling between neighbor hooding elements, wide linear range is obtained below frequency where high return loss resulted.

It will be appreciated that the non-planar antenna of the type described above in relation to Figures 5 through 10 may be conveniently configured or tuned to operate at a wide range of desired resonances and efficiently used for detecting proximity or changes in proximity to an object in sensor systems of the type described above (i.e., radio frequency operated sensor devices). Further, as one of ordinary skill in the art will appreciate, planar antennas, an example of which is described in relation to Figures 3 and 4, become difficult to manufacture with conventional etching techniques as the size of the antennas is scaled down. That is, current technology limits how small the necessary features of planar antennas may be constructed, thus limiting how small such antennas may be made. While doping the pattern is possible, the process is expensive and slow. However, it has been found that non-planar antennas are less expensive to manufacture, while also producing an antenna with a longer electrical length. A longer electrical length lowers the resonance of the antenna which simplifies the RF components used to drive the system. Lowering the resonance frequency also increases the measuring range since the measuring range is typically a wavelength of the resonance frequency. That is, the usage of non-planar antennas provide certain technical advantages, including the ability to reach lower resonance frequencies, which enables the usage of lower cost system components, the ability to construct probes having thinner profiles, as well as extending the measuring range compared to that of planar antenna structures.

In operation, the non-planar antenna of the present application - which, for example, may be the monopole antenna, the radially-extended ground plane with planar-spherical antenna, the non-planar helical antenna, the multiple pole antenna, or similar non-planar antennas - of the sensor head is excited with an electrical radio signal equal to or almost equal to the antennas resonance frequency. That is, the sensor system energizes that non-planar antenna with a radio signal. When an object, such as a machine component, is positioned within the created electromagnetic field, a loading is induced to the non-planar antenna due to a disruption of the field. The sensor system calculates proximity of the object to the antenna based on the loading induced to the non-planar antenna. In contrast to many known planar antennas, the non-planar antennas described herein enable an increased amount of energy to be emitted towards the object. As such, the non-planar antenna facilitates providing a stable electromagnetic field for use in measuring the proximity between the object and the antenna, while also providing other benefits already discussed.

In some embodiments, the non-planar antenna structure may be filled with a dielectric to help tune the resonance frequency and electromagnetic field pattern. In addition, multiple resonances may be designed into the non-planar antennas in order to cancel out noise or effects from temperature and humidity. As described above, the antenna structures may be backed with a ground plane, however some may be used in a tuned cavity method.

The above-described embodiments provide an efficient and cost-effective sensor system for use in measuring the proximity of a machine component. Exemplary embodiments of a sensor system and a non-planar antenna are described above in detail. The sensor system and non-planar antenna are not limited to the specific embodiments described herein, but rather, components of the sensor system and/or the non-planar antenna may be utilized independently and separately from other components and/or steps described herein. For example, the non-planar antenna may also be used in combination with other measuring systems and methods, and is not limited to practice with only the sensor system or the power system as described herein, unless otherwise indicated. Rather, the exemplary embodiments can be implemented and utilized in connection with many other measurement and/or monitoring applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A sensor head configured for use in a radio frequency operated sensing device, the sensor head comprising a non-planar antenna.
2. The sensor head of clause 1, further comprising means for connecting the sensor head to a data conduit;
   wherein the non-planar antenna is configured to have a predetermined resonance frequency within the radio frequency spectrum.
3. The sensor head of any preceding clause, further comprising a ground plane;
   wherein the means for connecting comprises a connector configured to electrically connect the non-planar antenna to the data conduit; and
   wherein the non-planar antenna comprises an antenna that extends axially from the connector a significant distance.
4. The sensor head of any preceding clause, wherein the non-planar antenna comprises one that extends axially beyond a termination point of the data conduit.
5. The sensor head of any preceding clause, wherein the non-planar antenna comprises a monopole antenna.
6. The sensor head of any preceding clause, wherein the monopole antenna includes a pole structure that extends axially along a substantially linear path from the connector.
7. The sensor head of any preceding clause, wherein the monopole antenna comprises a near end that resides adjacent to the connector and, opposite the near end, a far end;
   wherein a ground plane is disposed at the near end of the monopole antenna.
8. The sensor head of any preceding clause, wherein the ground plane comprises a circular disc that is radially aligned with the monopole antenna;
   further comprising a parasitic element; the parasitic element comprising a circular disc that is smaller than the circular disc of the ground plane;
   wherein the parasitic element is radially aligned with the monopole antenna and the ground plane; and
   wherein the parasitic element is offset axially from the ground plane a short distance toward the far end of the monopole antenna.
9. The sensor head of any preceding clause, wherein the non-planar antenna comprises an axially-extended ground plane and a spiral-planar antenna axially offset a predetermined distance from a far surface of the axially-extended ground plane.
10. The sensor head of any preceding clause, wherein:
   the axially-extended ground plane comprises a cylindrical shape that aligns radially with the conduit;
   the axially-extended ground plane comprises a near side, which is a planar surface positioned near the connector, and the far side, which is an planar surface opposite the near side on the cylindrical shape; and
   from the near side, the axially-extended ground plane extends axially outward to where it terminates at the far side.
11. The sensor head of any preceding clause, wherein:
   the spiral-planar antenna comprises a planar disc-shape having a pair of discrete spiraling arms;
   the spiral-planar antenna is arranged approximately parallel to the far side of the axially-extended ground plane; and
   the axially-extended ground plane is configured as an energy bandgap structure.
12. The sensor head of any preceding clause, wherein the axially-extended ground plane includes a continuous ground plane positioned at the near side, and a discontinuous ground plane positioned at the far side;
   wherein the continuous ground plane comprises a metallic sheet that covers substantially all of the near side of the axially extended ground plane;
   wherein the discontinuous ground plane comprises a plurality of discrete patches contained within the plane of the far side and having gaps separating each patch from each of the other patches; and
   wherein each of the plurality of patches is connected to the continuous ground plane by a vias extending axially between the continuous ground plane and the patch.
13. The sensor head of any preceding clause, wherein the non-planar antenna comprises a helical antenna.
14. The sensor head of any preceding clause, wherein the helical antenna comprises a helicoidal shape that extends axially from the connector.
15. The sensor head of any preceding clause, wherein the helical antenna comprises an approximate circular cross-sectional shape and a predetermined number of turns having a predetermined pitch that correspond to a desired resonance frequency.
16. The sensor head of any preceding clause, wherein the helical antenna is radially offset from the conduit;
   further comprising a ground plane, the ground plane being radially offset from the conduit such that the ground plane aligns with the helical antenna.
17. The sensor head of any preceding clause, wherein the non-planar antenna comprises a multiple pole antenna, the multiple pole antenna comprising a plurality of pole antennas.
18. The sensor head of any preceding clause, wherein the ground plane is positioned in proximity to the connector;
   further comprising a parasitic element, wherein the parasitic element is offset axially outward from the ground plane a short distance by supporting structure;
   wherein each of the plurality of pole antennas extends axially outward from a far side of the parasitic element.
19. The sensor head of any preceding clause, wherein the multiple pole antenna includes more than three poles, which are arranged with a central pole and surrounding poles spaced about the central pole;
   wherein each of the plurality of pole antennas have approximately the same length and are substantially parallel to each other.
20. A radio frequency operated sensing device for sensing a component, the sensing device comprising:
   a sensor head comprising a non-planar antenna that generates an electromagnetic field from a radio signal, wherein a loading is induced to said non-planar antenna when the component interacts with the electromagnetic field;
   a data conduit coupled to the sensor head, wherein at least one loading signal representative of the loading is reflected within said data conduit from said non-planar antenna;
   a signal processing device configured to receive the at least one loading signal and to generate an electrical output for use in monitoring the component.
21. The radio frequency operated sensing device in accordance with any preceding clause, wherein said signal processing device is further configured to measure a proximity of the component to said non-planar antenna based on the loading signal; and
   wherein the electrical output is substantially proportional to a proximity measurement of the component.
22. The radio frequency operated sensing device in accordance with any preceding clause, wherein the non-planar antenna comprises a resonant frequency within the radio spectrum; and
   wherein the radio signal is substantially equal to the resonant frequency of the non-planar antenna.

## Claims

1. A sensor head (202) configured for use in a radio frequency operated sensing device, the sensor head (202) comprising a non-planar antenna (404).

2. The sensor head of claim 1, further comprising means for connecting the sensor head (202) to a data conduit (204);
wherein the non-planar antenna (404) is configured to have a predetermined resonance frequency within the radio frequency spectrum.

3. The sensor head of claim 2, further comprising a ground plane (406);
wherein the means for connecting comprises a connector (405) configured to electrically connect the non-planar antenna to the data conduit (204); and
wherein the non-planar antenna (404) comprises an antenna that extends axially from the connector a significant distance.

4. The sensor head of claim 2 or claim 3, wherein the non-planar antenna (404) comprises one that extends axially beyond a termination point of the data conduit (204).

5. The sensor head of claim 2, 3 or 3, wherein the non-planar antenna (404) comprises a monopole antenna.

6. The sensor head of claim 5, wherein the monopole antenna includes a pole structure that extends axially along a substantially linear path from the connector (405).

7. The sensor head of claim 6, wherein the monopole antenna comprises a near end that resides adjacent to the connector (405) and, opposite the near end, a far end;
wherein a ground plane (406) is disposed at the near end of the monopole antenna.

8. The sensor head of claim 7, wherein the ground plane (406) comprises a circular disc that is radially aligned with the monopole antenna;
further comprising a parasitic element (408); the parasitic element comprising a circular disc that is smaller than the circular disc of the ground plane (406);
wherein the parasitic element (408) is radially aligned with the monopole antenna and the ground plane (406); and
wherein the parasitic element (408) is offset axially from the ground plane a short distance toward the far end of the monopole antenna.

9. The sensor head of any one of claims 2 to 8, wherein the non-planar antenna comprises an axially-extended ground plane (412) and a spiral-planar antenna (414) axially offset a predetermined distance from a far surface of the axially-extended ground plane.

10. The sensor head of claim 9, wherein:
the axially-extended ground plane (412) comprises a cylindrical shape that aligns radially with the conduit;
the axially-extended ground plane comprises a near side (415), which is a planar surface positioned near the connector, and the far side (416), which is an planar surface opposite the near side on the cylindrical shape; and
from the near side, the axially-extended ground plane (412) extends axially outward to where it terminates at the far side.

11. The sensor head of claim 10, wherein:
the spiral-planar antenna (414) comprises a planar disc-shape having a pair of discrete spiraling arms;
the spiral-planar antenna (414) is arranged approximately parallel to the far side of the axially-extended ground plane; and
the axially-extended ground plane (412) is configured as an energy bandgap structure.

12. The sensor head of claim 10 or claim 11, wherein the axially-extended ground plane (412) includes a continuous ground plane positioned at the near side, and a discontinuous ground plane positioned at the far side;
wherein the continuous ground plane comprises a metallic sheet that covers substantially all of the near side (415) of the axially extended ground plane (412);
wherein the discontinuous ground plane comprises a plurality of discrete patches (418) contained within the plane of the far side and having gaps separating each patch from each of the other patches; and
wherein each of the plurality of patches (418) is connected to the continuous ground plane by a vias extending axially between the continuous ground plane and the patch.

13. The sensor head of any one of claims 2 to 12, wherein the non-planar antenna comprises a helical antenna.

14. The sensor head of any one of claims 2 to 13, wherein the non-planar antenna comprises a multiple pole antenna, the multiple pole antenna comprising a plurality of pole antennas.

15. A radio frequency operated sensing device for sensing a component, the sensing device comprising:
a sensor head (202) comprising a non-planar antenna that generates an electromagnetic field from a radio signal, wherein a loading is induced to said non-planar antenna when the component interacts with the electromagnetic field;
a data conduit (204) coupled to the sensor head (202), wherein at least one loading signal representative of the loading is reflected within said data conduit from said non-planar antenna;
a signal processing device (200) configured to receive the at least one loading signal and to generate an electrical output for use in monitoring the component.
